(19) Europäisches Patentamt
European Patent Office
Office européen des brevets

(11) **EP 4 277 821 B1**

(12) **FASCICULE DE BREVET EUROPEEN**

(45) Date de publication et mention
de la délivrance du brevet:
**28.01.2026 Bulletin 2026/05**

(21) Numéro de dépôt: **21840077.8**

(22) Date de dépôt: **01.12.2021**

(51) Classification Internationale des Brevets (IPC):
**B60W 30/16** *(2020.01)*

(52) Classification Coopérative des Brevets (CPC):
**B60W 30/162;** B60W 2420/403; B60W 2420/408;
B60W 2554/802; B60W 2554/804; B60W 2720/106

(86) Numéro de dépôt international:
**PCT/FR2021/052167**

(87) Numéro de publication internationale:
**WO 2022/152984 (21.07.2022 Gazette 2022/29)**

(54) **PROCÉDÉ ET DISPOSITIF DE CONTRÔLE D'ACCÉLÉRATION D'UN VÉHICULE**

VERFAHREN UND VORRICHTUNG ZUR STEUERUNG DER BESCHLEUNIGUNG EINES FAHRZEUGS

METHOD AND DEVICE FOR CONTROLLING THE ACCELERATION OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2021 FR 2100446**

(43) Date de publication de la demande:
**22.11.2023 Bulletin 2023/47**

(73) Titulaire: **Stellantis Auto SAS**
**78300 Poissy (FR)**

(72) Inventeurs:
• **VIVET, Luc**
**75016 PARIS 16 (FR)**
• **OUANEZAR, Sofiane**
**78580 Maule (FR)**
• **EL HAMDANI, Ahmid**
**78140 VELIZY VILLACOUBLAY (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
EP-A2- 1 155 900     EP-A2- 1 721 800
EP-A2- 3 147 170     WO-A1-2015/033741
US-A1- 2003 093 210

EP 4 277 821 B1

## Description

## Domaine technique

La présente invention revendique la priorité de la demande française 2100446 déposée le 18.01.2021.

L'invention concerne les procédés et dispositifs de contrôle d'accélération d'un véhicule, notamment un véhicule automobile. L'invention concerne également un procédé et un dispositif de contrôle d'un véhicule, notamment un contrôle d'un système de régulation adaptative de vitesse d'un véhicule.

## Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »). Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule. Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC.

On connait par le document EP 1 721 800 A2 un dispositif de surveillance de l'état physique d'un conducteur, un système d'alarme dans un véhicule et un système d'assistance au conducteur.

Lorsqu'un autre véhicule se place brusquement devant un véhicule équipé d'un système ACC, par exemple après un dépassement et si l'autre véhicule se rabat devant le véhicule équipé du système ACC sans respecter les distances de sécurité, le système ACC va détecter cet autre véhicule comme étant trop proche devant et va générer une valeur de décélération cible élevée, provoquant un brutal ralentissement ou freinage du véhicule, ce qui est générateur d'inconfort pour les passagers et un potentiel risque en terme de sécurité.

## Résumé de l'invention

Un objet de la présente invention est d'améliorer le confort du ou des passagers d'un véhicule tout en garantissant un niveau de sécurité suffisant.

Un autre objet de la présente invention est d'améliorer la sécurité d'un véhicule en améliorant la connaissance de son environnement.

Selon un premier aspect, l'invention concerne un procédé de contrôle d'accélération d'un véhicule, le procédé étant mis en œuvre par au moins un calculateur embarqué dans le véhicule et comprenant les étapes suivantes :

- détection d'un autre véhicule précédant le véhicule sur une voie de circulation, l'autre véhicule étant détecté à une distance inférieure à une valeur seuil, la distance étant déterminée à partir de données reçues d'au moins un capteur de détection d'objet embarqué dans le véhicule ;
- détermination d'une valeur d'accélération cible en fonction d'une information représentative de la distance, la valeur d'accélération cible étant inférieure à 0 et destinée à un système de régulation adaptative de vitesse du véhicule ;
- détermination d'une consigne d'accélération pour le système de régulation adaptative de vitesse en pondérant la valeur d'accélération cible d'un coefficient de pondération correspondant au maximum entre un premier coefficient de pondération fonction de l'information représentative de distance et un deuxième coefficient de pondération fonction d'une différence de vitesse entre l'autre véhicule et le véhicule.

Selon l'invention, l'information représentative de distance correspond à un temps inter-véhicules, dit TIV, le premier coefficient de pondération étant inversement proportionnel au TIV sur un intervalle de valeurs de TIV comprises entre une valeur minimale de TIV et une valeur maximale de TIV.

Selon une autre variante, le premier coefficient de pondération varie en fonction du TIV selon une fonction linéaire décroissante sur l'intervalle de valeurs de TIV.

Selon une variante supplémentaire, le deuxième coefficient de pondération est inversement proportionnel à la différence de vitesse sur un intervalle de valeurs de différence de vitesse comprises entre une valeur minimale de différence de vitesse et une valeur maximale de différence de vitesse.

Selon encore une variante, le deuxième coefficient de pondération varie en fonction de la différence de vitesse selon une fonction linéaire décroissante sur l'intervalle de valeurs de différence de vitesse.

Selon une variante additionnelle, le premier coefficient de pondération est compris entre 0.3 et 1 et le deuxième coefficient de pondération est compris entre 0.3 et 1.

Selon une autre variante, le procédé comprend en outre une étape de contrôle du système de régulation adaptative de vitesse en fonction de la consigne d'accélération. Selon un deuxième aspect, l'invention concerne un dispositif de contrôle d'accélération d'un véhicule, le dispositif comprenant une mémoire associée à un processeur configuré pour la mise en œuvre des étapes du procédé selon le premier aspect de l'invention.

Selon un troisième aspect, l'invention concerne un véhicule, par exemple de type automobile, comprenant le dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur d'un dispositif de contrôle d'accélération d'un véhicule selon le deuxième aspect de l'invention.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Un cinquième aspect non présent dans les revendications concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de l'invention ressortiront de la description des modes de réalisation non limitatifs de l'invention ci-après, en référence aux figures 1 à 5 annexées, sur lesquelles :

[Fig. 1] illustre schématiquement un véhicule suivant un autre véhicule, selon un exemple de réalisation particulier de la présente invention ;

[Fig. 2] illustre un diagramme représentant un premier coefficient de pondération en fonction d'un temps inter-véhicule séparant les véhicules de la figure 1, selon un exemple de réalisation particulier de la présente invention ;

[Fig. 3] illustre un diagramme représentant un deuxième coefficient de pondération en fonction d'une différence de vitesse entre les véhicules de la figure 1, selon un exemple de réalisation particulier de la présente invention ;

[Fig. 4] illustre schématiquement un dispositif configuré pour contrôler l'accélération d'un véhicule de la figure 1, selon un exemple de réalisation particulier de la présente invention.

[Fig. 5] illustre un organigramme des différentes étapes d'un procédé de contrôle de l'accélération d'un véhicule de la figure 1, selon un exemple de réalisation particulier de la présente invention.

## Description des modes de réalisation

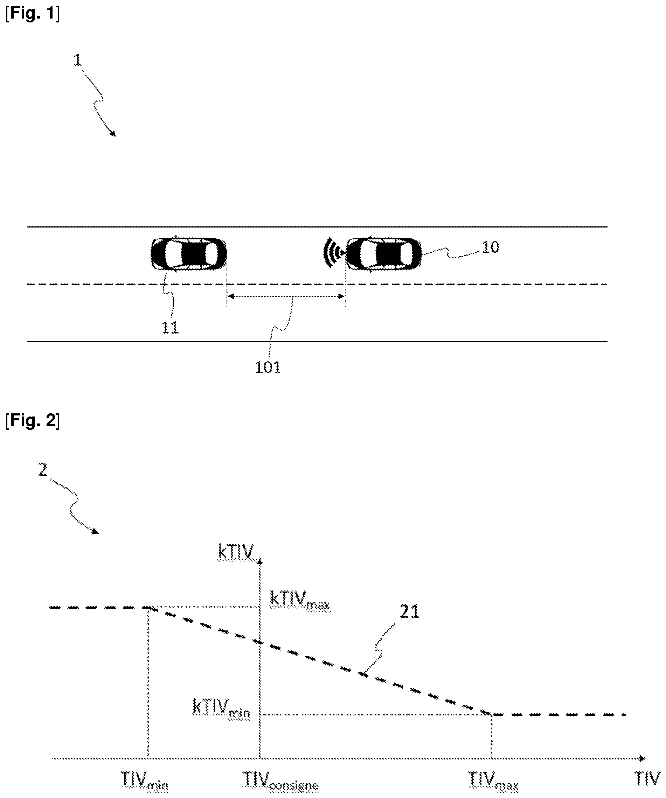

Un procédé et un dispositif de contrôle de l'accélération d'un véhicule vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier et non limitatif de réalisation de l'invention, un véhicule détecte la présence d'un autre véhicule le précédant sur une voie de circulation à une distance inférieure à une valeur seuil, par exemple inférieure à une valeur correspondant à une distance de sécurité ou à une distance minimale à maintenir entre deux véhicules se suivant sur une voie de circulation. Cette distance est par exemple déterminée par un calculateur du système embarquée du véhicule suiveur à partir de données reçues d'un ou plusieurs capteurs de détection d'objet équipant le véhicule suiveur. Le calculateur, par exemple le calculateur en charge de contrôler le système ACC du véhicule suiveur, détermine une valeur d'accélération cible, par exemple en fonction de la distance déterminée et/ou d'une distance ou temps inter-véhicule (TIV) à respecter vis-à-vis du véhicule le précédant sur la voie de circulation. La valeur d'accélération cible A(t) correspond avantageusement à une accélération négative (A(t) < 0) forçant le véhicule suiveur à ralentir pour laisser le véhicule qui le précède s'éloigner. Le calculateur détermine alors une consigne d'accélération pour le système ACC en pondérant la valeur d'accélération cible d'un coefficient de pondération déterminé. Le coefficient de pondération déterminé correspond avantageusement au maximum entre un premier coefficient de pondération fonction de la distance entre les véhicules et un deuxième coefficient de pondération fonction de la différence de vitesse entre les véhicules.

Un tel procédé permet à la fois de prendre en considération la distance entre les véhicules et la différence de vitesse pour pondérer une accélération cible. Ainsi, si par exemple la différence de vitesse est élevée, le système prend en considération le fait que le véhicule roulant devant va s'éloigner rapidement du véhicule équipé du système ACC. La consigne d'accélération (ou de décélération selon l'exemple de réalisation) est atténuée par rapport à la valeur d'accélération cible pour réduire la décélération et améliorer le confort des passagers, tout en garantissant leur sécurité puisque le véhicule roulant devant s'éloigne, augmentant de fait la distance entre les deux véhicules.

[Fig. 1] illustre schématiquement un véhicule 10 suivant un autre véhicule 11 dans un environnement routier 1, selon un exemple de réalisation particulier et non limitatif de la présente invention.

La figure 1 illustre un véhicule 10, par exemple un véhicule automobile, embarquant un ou plusieurs capteurs configurés pour détecter la présence d'objets dans l'environnement 1 du véhicule 10. Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond à un véhicule circulant sous la supervision totale d'un conducteur ou circulant dans un mode autonome ou semi-autonome. Le véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le véhicule 10 suit un véhicule 11, à une distance déterminée et pouvant varier dans le temps (en fonction du comportement dynamique du véhicule 10 et du véhicule 11), le véhicule 11 circulant sur une même voie de circulation dans la même direction que le véhicule 10. Le véhicule 11 correspond par exemple à un véhicule se retrouvant brusquement ou rapidement devant le véhicule 10, à une distance inférieure à un seuil, par exemple suite au dépassement du véhicule 10. La valeur seuil correspond par exemple à une consigne de distance ou temps inter-véhicule du système ACC embarqué dans le véhicule 10, par exemple égale à 1 ou 2 secondes dans le cas d'une distance exprimée via la temps inter-véhicule, dit TIV.

Selon une variante de réalisation, le véhicule 11 circule derrière le véhicule 10 ou sur un côté du véhicule 10, c'est-à-dire sur une voie de circulation parallèle à celle empruntée dans le véhicule 10, par exemple lorsque le véhicule 10 dépasse le véhicule 11 ou lorsque le véhicule 11 dépasse le véhicule 10.

Le véhicule 10 embarque par exemple un ou plusieurs des capteurs suivants :

- un ou plusieurs radars à ondes millimétriques arrangés sur le véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le véhicule 11 situé devant le véhicule 10 selon l'exemple de la figure 1), dans le but de détecter des obstacles et leurs distances vis-à-vis du véhicule 10 ; et/ou

- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le véhicule 11) situés dans le faisceau lumineux émis et de mesurer la distance entre le capteur et chaque objet détecté ; et/ou

- une ou plusieurs caméras (associées ou non à un capteur de profondeur) pour l'acquisition d'une ou plusieurs images de l'environnement autour du véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le véhicule 11, et d'en déduire un ou plusieurs paramètres dynamiques de l'objet mobile tels que la vitesse et/ou l'accélération.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le véhicule 10. Un tel système ADAS est configuré pour assister, voire remplacer, le conducteur du véhicule 10 pour contrôler le véhicule 10 sur son parcours.

Selon un exemple, le véhicule 10 embarque un système ADAS correspondant à un système de régulation automatique de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance inter-véhicule (DIV) déterminée (exprimée en mètre, ou en seconde dans le cas du TIV) vis-à-vis du véhicule 11 en amont du véhicule 10, c'est à dire d'un véhicule 11 circulant devant le véhicule 10 dans le même sens de circulation sur la même voie de circulation. Les données obtenues du ou des capteurs embarqués dans le véhicule 10 permettent au système ACC du véhicule 10 d'établir une valeur cible d'accélération $A_{cible}(t)$ au cours du temps 't'. L'accélération cible $A_{cible}(t)$ devient une consigne d'accélération $A_{consigne}(t)$ ou est modifiée pour donner une consigne d'accélération $A_{consigne}(t)$, comme cela sera expliqué ci-après. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du véhicule 10, notamment pour que ce(s) dernier(s) détermine(nt) les consignes de couple à générer par le groupe motopropulseur pour respecter les consignes d'accélération $A_{consigne}(t)$ et réguler la vitesse du véhicule 10.

Selon un autre exemple, le véhicule 10 embarque, par exemple en complément du système ACC, un système de détection de collision, par exemple par l'arrière, du véhicule 10, aussi appelé système pré-collision. Un tel système correspond par exemple à un système détectant l'arrivée d'un véhicule suiveur présentant un risque de collision par l'arrière du véhicule 10, ou encore à tout système de sécurité détectant un danger imminent pour le véhicule 10 et/ou mettant en œuvre les moyens de sécurité embarqués à la suite d'une telle détection. La détection d'un risque de collision est par exemple obtenue en prédisant le comportement dynamique d'un véhicule arrivant par l'arrière, et entraîne par exemple l'exécution d'une ou plusieurs instructions de guidage telles qu'une instruction d'augmentation de vitesse et/ou une instruction de décalage sur la gauche ou la droite du véhicule 10.

Selon encore un autre exemple, le véhicule 10 embarque, par exemple en complément du système ACC et/ou du système de détection de collision, un système d'aide au changement de voie de circulation. La décision pour un changement de voie est par exemple basée sur la prédiction du véhicule 11, par exemple lorsque ce dernier se situe sur la voie sur laquelle le véhicule 10 souhaite se déporter.

Un processus de contrôle de l'accélération d'un véhicule, par exemple le véhicule 10 suivant le véhicule 11, est avantageusement mis en œuvre par le véhicule 10, c'est-à-dire par un calculateur ou une combinaison de calculateurs du système embarqué du véhicule 10, par exemple par le ou les calculateurs en charge de contrôler le système ACC. A cet effet, une ou plusieurs consignes d'accélération sont déterminées via les opérations ou étapes décrites ci-dessous.

Dans une première opération, le véhicule 10 détecte la présence du véhicule 11 devant lui, par exemple à partir des données reçues d'un ou plusieurs radars et/ou LIDARs. Le véhicule 10 détermine, par exemple à partir des données ayant permis de détecter la présence du véhicule 11, une information représentative de la distance 101 séparant le véhicule 10 du véhicule 11. Une telle information correspond par exemple à une distance exprimée en mètre(s), dite distante inter-véhicule (DIV) ou une distance exprimée en seconde(s), dite temps inter-véhicule (TIV), qui prend en compte la distance en mètre et la vitesse du véhicule 10 (ainsi qu'en option la vitesse du véhicule 11).

La distance 101 séparant le véhicule 10 du véhicule 11 correspond par exemple à la distance entre d'une part l'avant du véhicule 10 ou la position du ou des capteurs mesurant la distance (par exemple le ou les radars intégrés au parechoc avant du véhicule 10) et d'autre part l'arrière du véhicule 11 (par exemple la partie du véhicule 11 réfléchissant les ondes émises par le ou les radars du véhicule 10). Cette distance 101 DIV ou TIV est inférieure à une valeur seuil correspondant par exemple à la distance de consigne du système ACC du véhicule 10, une telle consigne étant notée $DIV_{consigne}$ ou $TIV_{consigne}$ et étant paramétrée, par exemple par le constructeur du véhicule 10 (une telle consigne étant enregistrée en mémoire du système ACC) ou par le conducteur du véhicule 10 via une interface homme-machine, dite IHM.

Selon une autre variante, la valeur seuil correspond à la distance nécessaire au véhicule 10 pour s'arrêter en actionnant son système de freinage. Une telle distance d'arrêt est par exemple déterminée en fonction de la vitesse du véhicule 10, avec prise en compte optionnellement des conditions météorologiques (temps sec ou humide par exemple) et/ou une information d'adhérence entre le véhicule 10 et le revêtement de la route sur laquelle le véhicule 10 circule.

Selon une autre variante, la valeur seuil correspond à une valeur paramétrable, par exemple prédéfinie par le constructeur du véhicule ou par entrée par le conducteur (ou un passager) via l'IHM, indépendamment de $DIV_{consigne}$ ou $TIV_{consigne}$.

Lorsque la distance 101 est inférieure à la valeur seuil, cela signifie que le véhicule 10 est considéré comme étant trop proche du véhicule 11, ce qui est un problème de sécurité avec un risque de collision avec le véhicule 11.

Dans une deuxième opération, une valeur d'accélération cible est déterminée en fonction de la distance 101. La distance 101 étant inférieure à la valeur seuil, la valeur d'accélération cible est donc négative, le système ACC déterminant cette valeur d'accélération cible ayant notamment pour objectif de maintenir une distance de sécurité (par exemple $TIV_{consigne}$) entre le véhicule 10 et le véhicule 11. La valeur d'accélération cible (exprimée en $m.s^{-2}$) est par exemple calculée à partir de :

- information représentative de la distance 101 ; et
- une consigne de distance à respecter entre le véhicule 10 et le véhicule qui le précède, par exemple $TIV_{consigne}$.

Dans une troisième opération, le calculateur détermine une consigne d'accélération pour le système ACC du véhicule 10 à partir de la valeur d'accélération cible. Le calculateur détermine cette consigne d'accélération en prenant en compte la valeur d'accélération cible, la distance 101 ainsi que la différence, dite DV, de vitesse entre les véhicules 10 et 11. La différence de vitesse correspond avantageusement à la différence entre la vitesse $V_{11}$ du véhicule 11 (exprimée par exemple en m/s ou km/h) et la vitesse $V_{10}$ du véhicule 10 (exprimée en m/s ou km/h) à l'instant temporel où la distance 101 est mesurée ou déterminée. La différence de vitesse est obtenue par l'équation suivante :

$$DV = V_{11} - V_{10}$$

A cet effet, la consigne d'accélération est obtenue par pondération de la valeur d'accélération cible d'un coefficient de pondération déterminé. Le coefficient de pondération correspondant avantageusement au maximum entre un premier coefficient de pondération, dit kTIV, qui est fonction de l'information représentative de distance (par exemple le TIV) et un deuxième coefficient de pondération, dit kDV, qui est fonction de la différence de vitesse DV entre le véhicule 11 et le véhicule 10.

La consigne d'accélération $A_{consigne}(t)$ à un instant 't' est obtenue par l'équation suivante :

$$A_{consigne}(t) = max(kTIV, kDV)*A_{cible}(t)$$

Le premier coefficient de pondération kTIV (respectivement kDIV) varie avantageusement en fonction de la valeur du TIV (respectivement DIV) selon une fonction monotone décroissante, au moins sur un intervalle de valeurs de TIV (respectivement DIV) comprises entre une valeur minimale, dite $TIV_{min}$ (respectivement $DIV_{min}$), et une valeur maximale, dit $TIV_{max}$ (respectivement $DIV_{max}$). Une représentation graphique d'une telle fonction est représentée sur la figure 2.

Connaissant le TIV, le premier coefficient de pondération kTIV est par exemple obtenue de l'équation définissant la fonction. Selon une variante, le premier coefficient de pondération kTIV est obtenu d'une table de correspondance, dite LUT (de l'anglais « Look-Up Table »), dans laquelle une valeur de kTIV est associée à chaque valeur de TIV d'un ensemble de valeurs déterminé.

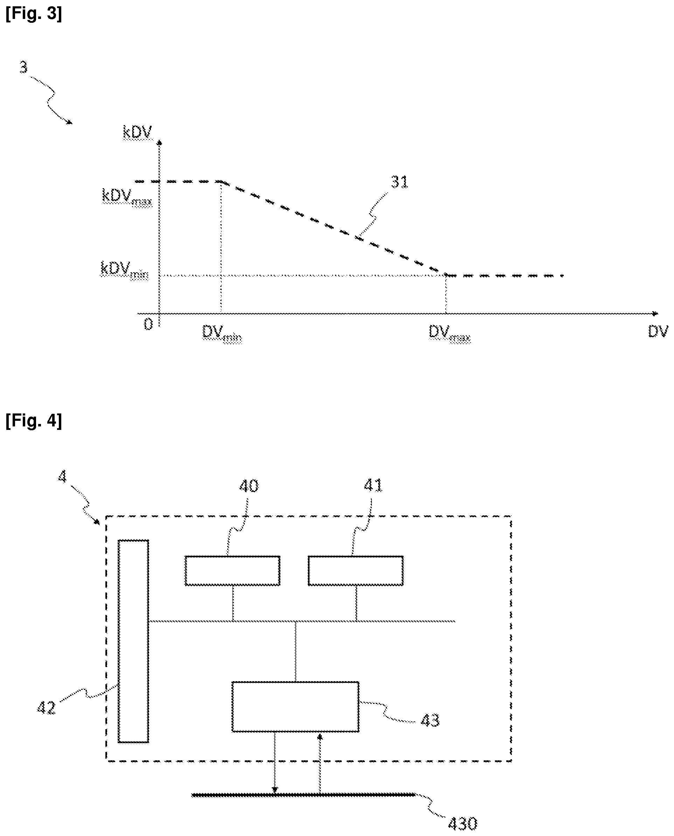

Le deuxième coefficient de pondération kDV varie avantageusement en fonction de la valeur de la différence de vitesse DV selon une fonction monotone décroissante, au moins sur un intervalle de valeurs de différence de vitesse DV comprises entre une valeur minimale, dite $DV_{min}$, et une valeur maximale, dit $DV_{max}$. Une représentation graphique d'une telle fonction est représentée sur la figure 3.

Connaissant le DV, le deuxième coefficient de pondération kDV est par exemple obtenue de l'équation définissant la fonction. Selon une variante, le deuxième coefficient de pondération kDV est obtenu d'une table de correspondance, dite LUT (de l'anglais « Look-Up Table »), dans laquelle une valeur de kDV est associée à chaque valeur de DV d'un ensemble de valeurs déterminé.

Une telle solution permet de pondérer la valeur d'accélération cible, permettant de diminuer l'amplitude de la décélération lorsque les conditions le permettent, c'est-à-dire lorsque les conditions de sécurité sont remplies, en prenant en compte notamment la différence de vitesse. Ainsi, plus la différence de vitesse est importante et plus la distance (TIV ou DIV) est grande, plus il est possible de diminuer la décélération cible calculée par le système ACC. Cela permet ainsi de réduire l'amplitude de la décélération lorsque notamment le véhicule 11 va plus vite du véhicule 10 et s'éloigne du véhicule 10 au fur et à mesure que le temps passe, donnant notamment une impression de sécurité aux passagers du véhicule 10, même s'il faut plus de temps au système ACC pour revenir à la consigne de distance $TIV_{consigne}$.

[Fig. 2] illustre l'évolution du premier coefficient de pondération kTIV en fonction du temps inter-véhicule TIV, selon un exemple de réalisation particulier et non limitatif de la présente invention.

La figure 2 illustre une courbe 21 montrant les valeurs prises par le premier coefficient de pondération kTIV en fonction de la valeur prise par le TIV. La courbe 21 comprend par exemple 3 parties :

- une première partie où kTIV prend une première valeur $kTIV_{max}$, par exemple égale à 1, lorsque la valeur de TIV est inférieure ou égale à une valeur minimale $TIV_{min}$, par exemple égal à 0.4 s ;
- une deuxième partie où kTIV correspond à une fonction linéaire décroissante de TIV, kTIV étant compris entre la première valeur $kTIV_{max}$ et une deuxième valeur $kTIV_{min}$, par exemple égale à 0.3, $kTIV_{max}$ étant associé à $TIV_{min}$ et $kTIV_{min}$ étant associé à une valeur maximale $TIV_{max}$, par exemple égal à 2 s ; et
- une troisième partie où kTIV prend la deuxième valeur $kTIV_{min}$ lorsque TIV est supérieur à la valeur maximale $TIV_{max}$.

Les valeurs de $TIV_{min}$ et $TIV_{max}$ sont par exemple déterminées ou définies par rapport à la valeur de consigne de TIV, dite $TIV_{consigne}$, ces valeurs permettant de paramétrer la pondération de l'accélération cible, par exemple selon le type de véhicule.

[Fig. 3] illustre l'évolution du deuxième coefficient de pondération kDV en fonction de la différence de vitesse DV entre le véhicule 11 et le véhicule 10, selon un exemple de réalisation particulier et non limitatif de la présente invention.

La figure 3 illustre une courbe 31 montrant les valeurs prises par le deuxième coefficient de pondération kDV en fonction de la valeur prise par la différence de vitesse DV. La courbe 31 comprend par exemple 3 parties :

- une première partie où kDV prend une première valeur $kDV_{max}$, par exemple égale à 1, lorsque la valeur de DV est inférieure ou égale à une valeur minimale $DV_{min}$, par exemple égal à 0.5 km/h ;
- une deuxième partie où kDV correspond à une fonction linéaire décroissante de DV, kDV étant compris entre la première valeur $kDV_{max}$ et une deuxième valeur $kDV_{min}$, par exemple égale à 0.3, $kDV_{max}$ étant associé à $DV_{min}$ et $kDV_{min}$ étant associée à une valeur maximale $DV_{max}$, par exemple égal à 10 km/h ; et
- une troisième partie où kDV prend la deuxième valeur $kDV_{min}$ lorsque DV est supérieur à la valeur maximale $DV_{max}$.

Les valeurs de $DV_{min}$ et $DV_{max}$ sont avantageusement paramétrables, par exemple selon le type de véhicule.

[Fig. 4] illustre schématiquement un dispositif configuré pour contrôler l'accélération d'un véhicule, par exemple le véhicule 10, selon un exemple de réalisation particulier et non limitatif de la présente invention. Le dispositif 4 correspond par exemple à un dispositif embarqué dans le véhicule 10, par exemple un calculateur.

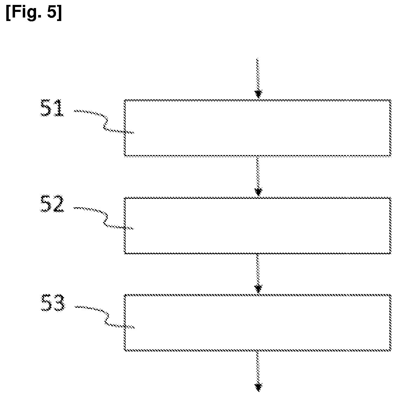

Le dispositif 4 est par exemple configuré pour la mise en œuvre des opérations décrites en regard des figure 1, 2, et 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels. Selon différents modes de réalisation particuliers, le dispositif 4 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon un mode de réalisation particulier et non limitatif, le dispositif 4 comprend un bloc 42 d'éléments d'interface pour communiquer avec des dispositifs externes, par exemple un serveur distant ou le « cloud », d'autres véhicules. Les éléments d'interface du bloc 42 comprennent une ou plusieurs des interfaces suivantes :

- interface radiofréquence RF, par exemple de type Bluetooth® ou Wi-Fi®, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre mode de réalisation particulier, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 4 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 5] illustre un organigramme des différentes étapes d'un procédé de contrôle de l'accélération d'un véhicule, par exemple le véhicule 10, selon un exemple de réalisation particulier et non limitatif de la présente invention. Le procédé est par exemple mis en œuvre par un dispositif embarqué dans le véhicule 10 ou par le dispositif 4 de la figure 4.

Dans une première étape 51, un autre véhicule, par exemple le véhicule 11, précédant le véhicule, par exemple le véhicule 10, sur une voie de circulation est détecté par le véhicule 10. L'autre véhicule est détecté à une distance inférieure à une valeur seuil, la distance étant déterminée à partir de données reçues d'au moins un capteur de détection d'objet embarqué dans le véhicule 10.

Dans une deuxième étape 52, une valeur d'accélération cible est déterminée en fonction d'une information représentative de la distance, la valeur d'accélération cible étant inférieure à 0 et destinée à un système de régulation adaptative de vitesse du véhicule 10.

Dans une troisième étape 53, une consigne d'accélération pour le système de régulation adaptative de vitesse est déterminée ou calculée en pondérant la valeur d'accélération cible d'un coefficient de pondération, lequel correspond au maximum entre d'une part un premier coefficient de pondération qui est fonction de l'information représentative de distance et d'autre part un deuxième coefficient de pondération qui est fonction d'une différence de vitesse entre l'autre véhicule et le véhicule.

Selon une variante de réalisation, les variantes et exemples des opérations décrits en relation avec la figure 1 s'appliquent aux étapes du procédé de la figure 5.

Bien entendu, l'invention ne se limite pas aux modes de réalisation décrits ci-avant mais s'étend à un procédé de contrôle d'un véhicule, ainsi qu'au dispositif configuré pour la mise en œuvre d'un tel procédé.

L'invention concerne également un véhicule, par exemple automobile ou plus généralement un véhicule autonome à moteur terrestre, comprenant le dispositif 4 de la figure 4.

## Revendications

1. Procédé de contrôle d'accélération d'un véhicule (10), ledit procédé étant mis en œuvre par au moins un calculateur (4) embarqué dans ledit véhicule (10) et comprenant les étapes suivantes :

   - détection (51) d'un autre véhicule (11) précédant ledit véhicule (10) sur une voie de circulation, ledit autre véhicule (11) étant détecté à une distance (101) inférieure à une valeur seuil, ladite distance (101) étant déterminée à partir de données reçues d'au moins un capteur de détection d'objet embarqué dans ledit véhicule (10) ;
   - détermination (52) d'une valeur d'accélération cible en fonction d'une information représentative de ladite distance (101), ladite valeur d'accélération cible étant inférieure à 0 et destinée à un système de régulation adaptative de vitesse dudit véhicule (10) ; et **caractérisé par** l'étape:

   - détermination (53) d'une consigne d'accélération pour ledit système de régulation adaptative de vitesse en pondérant ladite valeur d'accélération cible d'un coefficient de pondération correspondant au maximum entre un premier coefficient de pondération fonction de ladite information représentative de distance (101) et un deuxième coefficient de pondération fonction d'une différence de vitesse entre ledit autre véhicule (11) et ledit véhicule (10) ;

   ladite information représentative de distance (101) correspondant à un temps inter-véhicules, dit TIV, ledit premier coefficient de pondération étant inversement proportionnel audit TIV sur un intervalle de valeurs de TIV comprises entre une valeur minimale de TIV et une valeur maximale de TIV.

2. Procédé selon la revendication 1, pour lequel ledit premier coefficient de pondération varie en fonction dudit TIV selon une fonction linéaire décroissante sur ledit intervalle de valeurs de TIV.

3. Procédé selon l'une des revendications 1 à 2, pour lequel ledit deuxième coefficient de pondération est inversement proportionnel à ladite différence de vitesse sur un intervalle de valeurs de différence de vitesse comprises entre une valeur minimale de différence de vitesse et une valeur maximale de différence de vitesse.

4. Procédé selon la revendication 3, pour lequel ledit deuxième coefficient de pondération varie en fonction de ladite différence de vitesse selon une fonction linéaire décroissante sur ledit intervalle de valeurs de différence de vitesse.

5. Procédé selon l'une des revendications 1 à 4, pour lequel ledit premier coefficient de pondération est compris entre 0.3 et 1 et ledit deuxième coefficient de pondération est compris entre 0.3 et 1.

6. Procédé selon l'une des revendications 1 à 5, comprenant en outre une étape de contrôle dudit système de régulation adaptative de vitesse en fonction de ladite consigne d'accélération.

7. Dispositif (4) de contrôle d'accélération d'un véhicule (10), ledit dispositif (4) comprenant au moins un capteur de détection d'objet embarqué dans le véhicule, une mémoire (41) associée à au moins un processeur (40) configuré pour la mise en œuvre des étapes du procédé selon l'une quelconque des revendications 1 à 6.

8. Véhicule (10) comprenant le dispositif (4) selon la revendication 7.

9. Produit programme d'ordinateur comportant des instructions adaptées pour l'exécution des étapes du procédé selon l'une des revendications 1 à 6, lorsque le programme d'ordinateur est exécuté par au moins un processeur d'un dispositif de contrôle d'accélération d'un véhicule selon la revendication 7.

**Patentansprüche**

1. Ein Verfahren zur Steuerung der Beschleunigung eines Fahrzeugs (10), wobei dieses Verfahren von mindestens einem Computer (4) an Bord des Fahrzeugs (10) implementiert wird und die folgenden Schritte umfasst:

- Erkennung (51) eines anderen Fahrzeugs (11), das sich auf einer Fahrspur vor dem Fahrzeug (10) befindet, wobei das andere Fahrzeug (11) in einem Abstand (101) unterhalb eines Schwellenwerts erkannt wird, wobei dieser Abstand (101) aus Daten ermittelt wird, die von mindestens einem Objekterkennungssensor an Bord des Fahrzeugs (10) empfangen werden;
- Bestimmung (52) eines Sollwerts der Beschleunigung als Funktion von Informationen, die diesen Abstand (101) repräsentieren, wobei dieser Sollwert der Beschleunigung kleiner als 0 ist und für ein adaptives Geschwindigkeitsregelungssystem des Fahrzeugs (10) bestimmt wird;

und **gekennzeichnet durch** den Schritt:

- Bestimmung (53) eines Sollwerts der Beschleunigung für das adaptive Geschwindigkeitsregelungssystem durch Gewichtung des Sollwerts der Beschleunigung mit einem Gewichtungskoeffizienten, der dem Maximum zwischen einem ersten Gewichtungskoeffizienten basierend auf den Abstandsinformationen (101) und einem zweiten Gewichtungskoeffizienten basierend auf der Geschwindigkeitsdifferenz zwischen dem anderen Fahrzeug (11) und dem Fahrzeug (10) entspricht;

Die Distanzinformation (101) entspricht einer Fahrzeugzwischenzeit, der sogenannten TIV, wobei der erste Gewichtungskoeffizient umgekehrt proportional zur TIV über ein Intervall von TIV-Werten zwischen einem minimalen und einem maximalen TIV-Wert ist.

2. Verfahren nach Anspruch 1, wobei der erste Gewichtungskoeffizient als Funktion des TIV gemäß einer linearen Funktion variiert, die über das Werteintervall des TIV abnimmt.

3. Verfahren nach einem der Ansprüche 1 oder 2, wobei der zweite Gewichtungskoeffizient umgekehrt proportional zur Geschwindigkeitsdifferenz über ein Intervall von Geschwindigkeitsdifferenzwerten zwischen einem minimalen Geschwindigkeitsdifferenzwert und einem maximalen Geschwindigkeitsdifferenzwert ist.

4. Verfahren nach Anspruch 3, wobei der zweite Gewichtungskoeffizient als Funktion der Geschwindigkeitsdifferenz gemäß einer linearen Funktion variiert, die über den Bereich der Geschwindigkeitsdifferenzwerte abnimmt.

5. Verfahren nach einem der Ansprüche 1 bis 4, wobei der erste Gewichtungskoeffizient zwischen 0,3 und 1 und der zweite Gewichtungskoeffizient zwischen 0,3 und 1 liegt.

**6.** Verfahren nach einem der Ansprüche 1 bis 5, ferner umfassend einen Schritt der Steuerung des adaptiven Geschwindigkeitsregelungssystems in Abhängigkeit vom Sollwert der Beschleunigung.

**7.** Beschleunigungssteuergerät (4) eines Fahrzeugs (10), wobei das Gerät (4) mindestens einen Objekterkennungssensor an Bord des Fahrzeugs und einen Speicher (41) umfasst, der mit mindestens einem Prozessor (40) verbunden ist, der für die Durchführung der Schritte des Verfahrens nach einem der Ansprüche 1 bis 6 konfiguriert ist.

**8.** Fahrzeug (10) umfassend die Vorrichtung (4) nach Anspruch 7.

**9.** Produktcomputerprogramm mit Anweisungen, die zur Durchführung der Verfahrensschritte nach einem der Ansprüche 1 bis 6 geeignet sind, wobei das Computerprogramm von mindestens einem Prozessor einer Fahrzeugbeschleunigungssteuerungseinrichtung nach Anspruch 7 ausgeführt wird.

**Claims**

**1.** A method for controlling the acceleration of a vehicle (10), said method being implemented by at least one computer (4) on board said vehicle (10) and comprising the following steps:

- detection (51) of another vehicle (11) preceding said vehicle (10) on a traffic lane, said other vehicle (11) being detected at a distance (101) less than a threshold value, said distance (101) being determined from data received from at least one object detection sensor on board said vehicle (10);
- determination (52) of a target acceleration value as a function of information representative of said distance (101), said target acceleration value being less than 0 and intended for an adaptive speed control system of said vehicle (10);

and **characterized by** the step:

- determination (53) of an acceleration setpoint for said adaptive speed control system by weighting said target acceleration value by a weighting coefficient corresponding to the maximum between a first weighting coefficient based on said distance information (101) and a second weighting coefficient based on a speed difference between said other vehicle (11) and said vehicle (10);

said distance information (101) corresponding to an inter-vehicle time, said TIV, said first weighting coefficient being inversely proportional to said TIV over an interval of TIV values between a minimum TIV value and a maximum TIV value .

**2.** Method according to claim 1, wherein said first weighting coefficient varies as a function of said TIV according to a linear function decreasing over said interval of values of TIV.

**3.** A method according to any one of claims 1 to 2, wherein said second weighting coefficient is inversely proportional to said speed difference over an interval of speed difference values between a minimum speed difference value and a maximum speed difference value.

**4.** A method according to claim 3, wherein said second weighting coefficient varies as a function of said speed difference according to a linear function decreasing over said range of speed difference values.

**5.** A method according to any one of claims 1 to 4, wherein said first weighting coefficient is between 0.3 and 1 and said second weighting coefficient is between 0.3 and 1.

**6.** A method according to any one of claims 1 to 5, further comprising a step of controlling said adaptive speed control system as a function of said acceleration setpoint.

**7.** Acceleration control device (4) of a vehicle (10), said device (4) comprising at least one object detection sensor on board the vehicle, a memory (41) associated with at least one processor (40) configured for the implementation of the steps of the method according to any one of claims 1 to 6.

**8.** Vehicle (10) comprising the device (4) according to claim 7.

**9.** Product computer program comprising instructions adapted for carrying out the steps of the process according to any one of claims 1 to 6, where the computer program is executed by at least one processor of a vehicle acceleration control device according to claim 7.

[Fig. 1]

[Fig. 2]

[Fig. 3]

[Fig. 4]

[Fig. 5]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2100446
- EP 11721800 A2